# EUROPEAN PATENT SPECIFICATION

(11) **EP 3 515 758 B1**
(45) Date of publication and mention of the grant of the patent: **07.04.2021**
(21) Application number: 18802529.0
(22) Date of filing: 17.05.2018
(51) Int. Cl.: B60P 7/08, F16G 11/12

(54) **LOADBINDERS AND OVERLOAD INDICATORS**
LASTENSPANNER UND ÜBERLASTUNGSINDIKATOREN
TENDEURS À LEVIER ET INDICATEURS DE SURCHARGE

(30) Priority: 18.05.2017 AU 2017901876; 06.11.2017 AU 2017904498; 06.02.2018 AU 2018900361
(43) Date of publication of application: 31.07.2019
(73) Proprietor: Wang, Shang An, Hornsby, New South Wales 2077 (AU)
(72) Inventor: Wang, Shang An, Hornsby, New South Wales 2077 (AU)
(74) Representative: Hamilton, Alistair
(86) International application number: PCT/AU2018/050465
(87) International publication number: WO 2018/209392

(56) References cited:
- WO-A1-94/11220
- WO-A1-2005/102556
- WO-A2-2007/100315
- US-A- 1 157 110
- US-A- 2 715 843
- US-A- 3 065 007
- US-A- 3 065 007
- US-A1- 2016 195 165
- US-B1- 9 610 883
- US-B1- 9 610 883

## Description

### Technical Field

The present invention relates to loadbinders and overload indicators.

### Background to the Invention

Loadbinders are used to secure cargo or other loads in vehicles. The most common use of loadbinders is to secure cargo to road vehicles such as trucks to prevent the cargo from moving around during transit to prevent damage to the cargo, the truck and to avoid road accidents which may occur if the load were to come loose during transit.

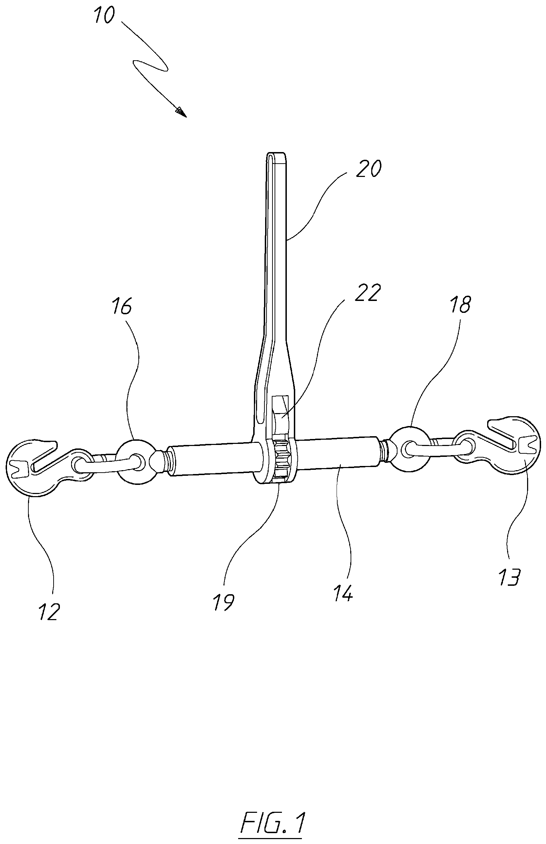

Referring to figure 1, an example of a prior art loadbinder 10 is shown. The loadbinder includes two attachment points in the form of hooks 12, 13 for attaching the loadbinder to secure a load on a vehicle by attaching to a chain or a sturdy point on the vehicle. An adjustment mechanism is provided between the two attachment points for adjusting the effective length of the loadbinder. The adjustment mechanism includes a threaded rotating component in the form of sleeve 14. The sleeve 14 has threaded holes in each end which threadedly receive eyelets 16, 18. Importantly, one of eyelets 16 has a left hand thread whereas the other of the eyelets 18 has a right hand thread.

Loadbinder 10 further includes an elongate handle 20 which is pivotally coupled to sleeve 14 by way of a ratchet arrangement. Sleeve 14 includes a ratchet wheel 19 formation which is integrally formed with the sleeve. Handle 20 pivots about the ratchet wheel 19 and includes a spring-loaded pawl 22 which engages with the ratchet wheel 19 when the handle is moving in the driving direction and slips over the teeth of ratchet wheel 19 when the handle is moved in the return direction. The ratchet arrangement includes a selector associated with the pawl so that the driving direction can be selected from clockwise or anticlockwise to either tighten or loosen the loadbinder.

By repeatedly moving handle 20 in the driving and return directions the sleeve 14 is incrementally rotated but the eyelets 16, 18 do not rotate. The relative rotation of the eyelets 16, 18 and sleeve 14 causes the eyelets 16, 18 to move either outwardly or inwardly by virtue of the threaded engagement of the eyelets with the sleeve depending upon the direction of rotation of the sleeve. Because the eyelets 16, 18 have oppositely arranged threads (left hand and right hand) they move together in unison either inwardly or outwardly as the sleeve rotates to change the effective length of the loadbinder so as to restrain or release a load.

It has been found with the type of loadbinder shown in figure 1 that the handle is often obstructed from movement by items such as cargo, parts of the vehicle, or other chains or straps in the vicinity of the loadbinder. This makes the loadbinder difficult to operate and often requires the loadbinder to be removed and repositioned on the cargo to allow free movement of the handle. Safely securing loads with loadbinders of this type can become time consuming which adds to the time cost of the job.

In addition, it is possible to inadvertently overload a loadbinder of the type shown in figure 1 by overtightening the loadbinder. This places a tension on the loadbinder above safe working operating conditions which can lead to a sudden unexpected failure of the loadbinder.

US9-A-61088 discloses tensioning device including a gear box containing a gear assembly with one gear attached directly to a barrel which passes through the gear box and threaded shafts at either end of the barrel. Inside the gear box is a guide placed such that a drive gear and the barrel gear are engaged when assembled and a socket wrench receptacle is part of the drive gear. The threaded shafts move in and out of the barrel based on the rotation of the gear.

US 9 610 883 B1 discloses a tensioning device according to the preamble of claim 1.

There remains a need for improved loadbinders and to provide improved measures to avoid equipment going into overload conditions.

### Summary of the Invention

In a first aspect the present invention provides a loadbinder including: two attachment points for attaching the loadbinder to secure a load on a vehicle; an adjustment mechanism is provided between the two attachment points for adjusting the effective length of the loadbinder; the adjustment mechanism includes at least one threaded rotating component and rotation of the rotating component gives rise to a change in the effective length of the loadbinder; a generally elongate handle; the handle is pivotally coupled to the adjustment mechanism; the handle is arranged to drive the at least one rotating component by pivoting in a plane which is substantially parallel to the axis of rotation of the rotating component, wherein the adjustment mechanism includes an arrangement of bevel gears that are provided in a housing, and wherein housing is provided in two parts which are able to rotate with respect to one another to allow the loadbinder to adopt a partially folded configuration.

At least one of the bevel gears may be mounted at one end of the at least one rotating component.

The handle may be mounted on a shaft which drives a bevel gear.

The handle may be coupled to the adjustment mechanism by way of a ratchet and pawl arrangement.

A second ratchet and pawl arrangement may be provided to enable the handle to operate a driving stroke when rotated in either direction.

The handle may be arranged to lie parallel with one of the threaded rotating components.

In a second aspect the present invention provides a loadbinder including: an arrangement to provide a visual indication that the loadbinder is overloaded.

The loadbinder may include a resilient portion and compression of the resilient portion gives rise to the visual indication.

The resilient portion may include one or more disc springs.

The disc springs may be mounted inside a housing and about a shaft which extends out of the housing.

The shaft may include a visual indicator which is hidden inside the housing under normal loads and which becomes visible from outside the housing when the loadbinder is overloaded.

In a third aspect the present invention provides an overload indicator including: a resilient portion; a shaft portion; and a housing; a visual indicator is hidden inside the housing under normal loads and compression of the resilient portion gives rise to the visual indicator becoming visible from outside the housing to thereby indicate an overload condition.

In a fourth aspect the invention provides a loadbinder including: an overload indicator according to the third aspect of the invention.

In a fifth aspect the invention provides a lifting hook including: an overload indicator according to the third aspect of the invention.

### Brief Description of the Drawings

An embodiment of the present invention will now be described, by way of example only, with reference to the accompanying drawings, in which:
Figure 1 is a perspective view of a prior art loadbinder;
Figure 2 is a partial perspective view of a loadbinder;
Figure 3 is an enlarged view of the gearbox arrangement of the loadbinder of figure 2;
Figure 4 is a partially disassembled view of the loadbinder of figure 2;
Figure 5 is a perspective view of another embodiment of a loadbinder;
Figure 6 shows the loadbinder of figure 5 in a partially folded configuration;
Figure 7 is a perspective view of another embodiment of a loadbinder;
Figure 8 is an enlarged view of the gearbox arrangement of the loadbinder of figure 7;
Figure 9 is a perspective view of another embodiment of a loadbinder;
Figure 10 is another perspective view of the loadbinder of figure 9; and
Figure 11 is an upper perspective view of another embodiment of a loadbinder with upper gearbox housing half removed; and
Figure 12 is a plan view of the loadbinder of figure 11 shown in an overloaded condition.

### Detailed Description of the Preferred Embodiment

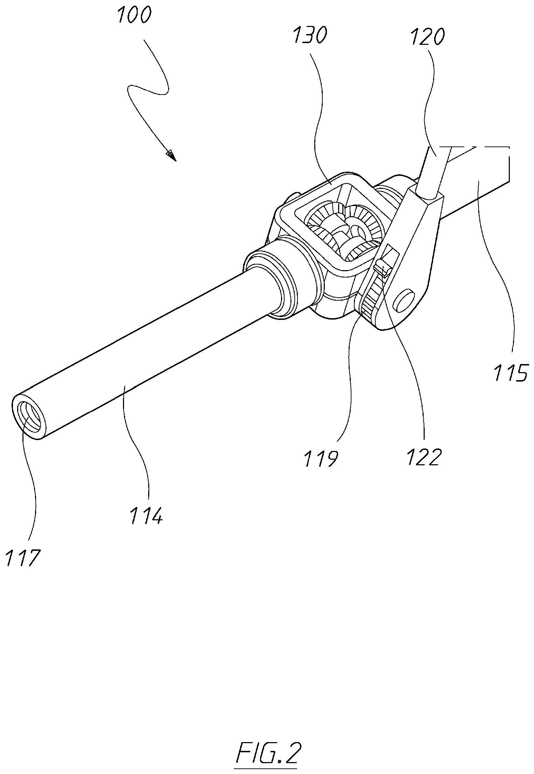

Referring to figures 2 to 4, a loadbinder 100 is shown. This loadbinder differs from the loadbinder in figure 1 by the provision of an adjustment mechanism which includes a gearbox arrangement 130. Sleeve 14 is replaced by sleeves 114 and 115 which rotate in opposite directions in use under the control of gearbox 130 and handle 120. Each of sleeves 114, 115 include threaded holes 117 for receiving eyelets (not shown) which are fitted with attachment points in the form of hooks as was the case for the loadbinder of figure 1. In contrast to the loadbinder of figure 1, the threads of the holes 117 in the ends of the sleeves 114, 115 are not left and right hand threads. Instead they are of the same orientation and would typically be conventional right handed threads.

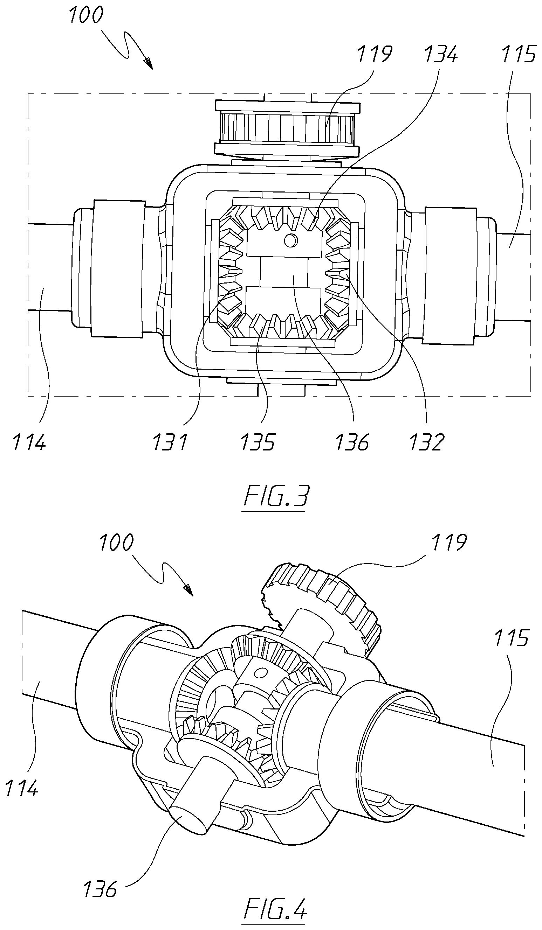

As best seen in figure 3, the gearbox 130 includes a series of bevel gears. The ratchet wheel 119 which is rotated by handle 120 and ratchet 122 is keyed onto shaft 136 along with driving gear 134. Idle gear 135 is mounted on shaft 136 but is free to rotate on the shaft. Bevel gears 131 and 132 are rigidly affixed to the inner ends of sleeves 114 and 115 respectively.

The loadbinder is operated by repeatedly pivoting handle 120 in opposite directions. In a driving direction the ratchet of handle 120 drives the ratchet wheel 119 which in turn drives the driving gear 134. The driving gear 134 in turn causes rotation of gears 1312, 132 and hence also rotates sleeves 114, 115 in opposite directions. The rotation of the sleeves 114, 115 causes movement of the eyelets attached to the sleeves to move either outwardly or inwardly of the loadbinder to adjust the effective length of the loadbinder.

In the loadbinder 10 of figure 1 the handle 20 pivots in a plane that is perpendicular to the axis of rotation of sleeve 14. In the loadbinder 100 of figures 2 to 4 the handle 120 pivots in a plane which is substantially parallel to the axis of rotation of the rotating sleeves 114, 115. The handle 120 is generally aligned with the length of the loadbinder and associated chains. This means that the handle is far less likely to be obstructed by surrounding objects and thus the loadbinder is easier to deploy and make secure a load.

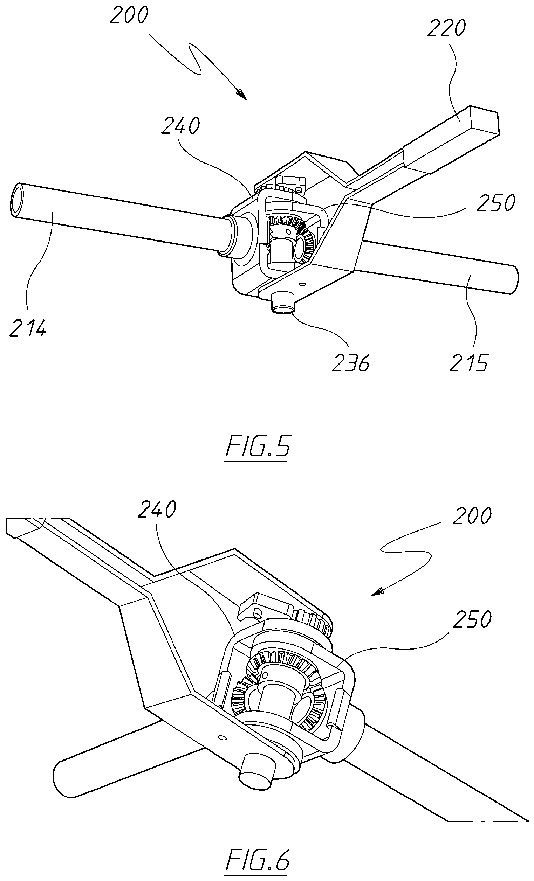

Referring to figures 5 and 6, another embodiment of loadbinder 200 is shown. This embodiment differs from the embodiment shown in figures 2 to 4 in that the gearbox housing is provided in two parts 240, 250 which can rotate with respect to one another about shaft 236. The idler gear is omitted from this embodiment. As can be seen in figure 6, the loadbinder can adopt a partially folded configuration over a range of movement. The loadbinder may still be operated to restrain or release a load when in the folded configuration. This embodiment provides further flexibility with deploying the load binder as it can accommodate a change in direction of the chain or other type of binding being used to secure a load.

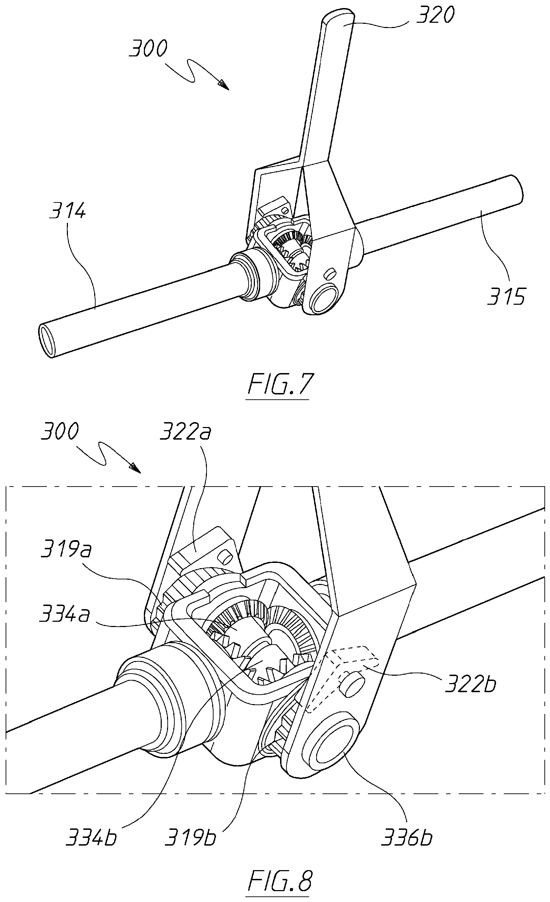

Referring to figures 7 and 8, yet another embodiment of loadbinder 300 is shown. This embodiment differs from that shown in figures 2 to 4 because it is double-acting in that the handle performs a driving stroke when rotated in either direction. This is achieved by the provision of an additional ratchet wheel 319a and pawl 322b. The shaft upon which the bevel gears and ratchet wheels are mounted is split in two halves 336a, 336b which rotate in opposite directions. Ratchet wheel 319a is keyed onto half shaft 336a (not visible) along with gear 334a and ratchet wheel 319b is keyed onto half shaft 336b along with gear 334b. The pawls 322a, 322b are set to work in opposite directions. When handle 320 is rotated in one direction the gear 334a drives the sleeves 314, 315 and gear 334b rotates freely as an idler gear. When the handle 320 is rotated in the other direction the gear 334b drives the sleeves 314, 315 and gear 334a rotates freely as an idler gear.

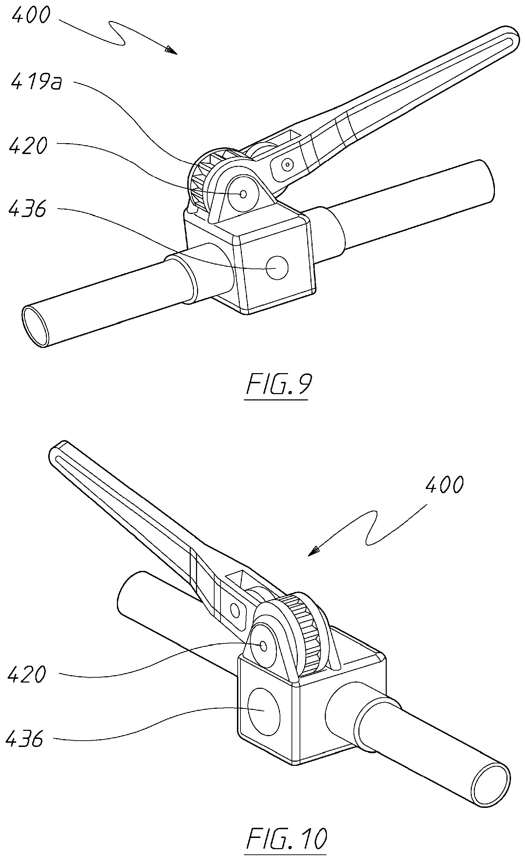

Referring to figures 9 and 10, another embodiment of a loadbinder 400 is shown. This embodiment is somewhat similar to the first described embodiment 100. In this embodiment the handle has been moved to sit on top of the gearbox arrangement. An additional ratchet wheel 319a meshes with wheel 119 which is hidden inside the gearbox and is keyed to shaft 336. In this embodiment the handle is able to be stowed neatly away by folding the handle flat to lie parallel with either one of the sleeves.

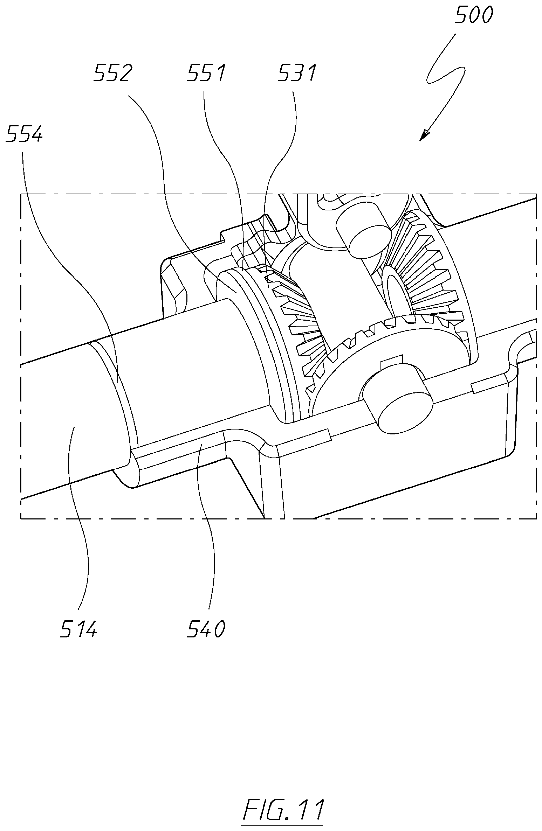

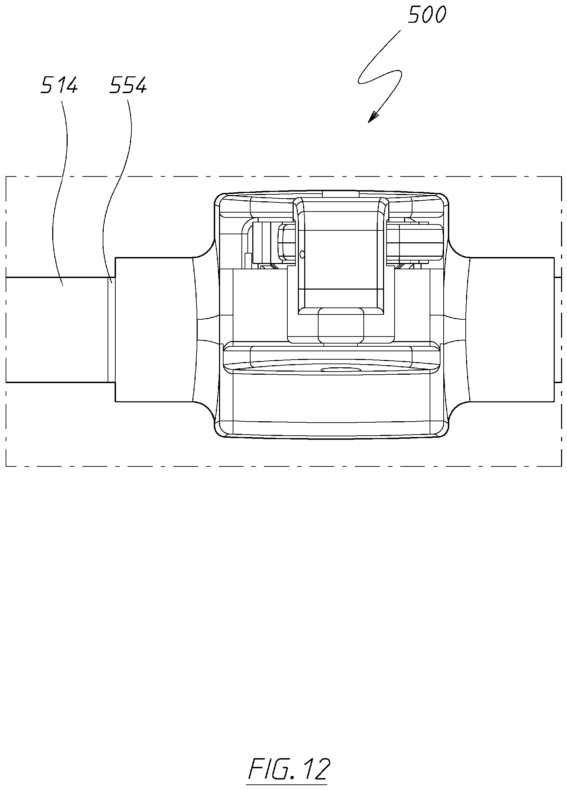

Referring to figures 11 and 12, another embodiment of a loadbinder 500 is shown. This embodiment is somewhat similar to the loadbinder 400 of figures 9 and 10 and has been modified to include an arrangement to provide a visual indication that the loadbinder is overloaded. Loadbinder 500 is shown in figure 11 with the upper half of the gearbox housing removed to illustrate the internal components of the gearbox.

Referring to figure 11, loadbinder 500 includes a resilient portion in the form of disc springs 552, 551. A disc spring is a type of dished washer which is engineered to provide a known deflection at a known load. They are commercially available from a range of manufacturers such as Belleville International (see www.bellevilleintl.com). In figure 11 two identical disc springs 551, 552 are mounted around a shaft in the form of sleeve 514. The disc springs 551, 552 are mounted back-to-back between the gearbox housing and the bevel gear 531 so that the dished centre portions of the springs extend outwardly to the left and right in the drawing. Sleeve 514 includes a visual indicator in the form of a painted coloured band 554 which is hidden inside the housing under normal loads and which becomes visible from outside the housing when the loadbinder is overloaded.

The material and geometry of the disc springs 551, 552 are selected so that when the loadbinder exceeds its safe working load then the disc springs compress to an extent that the band 554 becomes visible outside of the gearbox housing. The safe load can thus be set by selecting appropriate disc springs. Safe operating loads can be accommodated, for instance, in the range 500kg to 30T. Referring to figure 12, loadbinder 500 is shown in an overloaded condition. The disc springs 551, 552 have become compressed and the sleeve 514 has moved outwardly to the left as shown in the figure. The painted band 554 is now visible outside of the gearbox housing indicating that the loadbinder has been overloaded.

Although the overload indicator has been described with reference to use on a loadbinder, it could also be used on a lifting hook. The hook is mounted to a shaft by way of the overload indicator. If a load is applied to the hook which exceeds the safe working load of the hook then the visual indicator becomes visible by extending outside of the hook and into view of an operator.

It can be seen that embodiments of the invention provide an indication that an item of machinery or equipment has been placed into an overload condition. A simple and clear visual indication gives prompt warning to an operator to relieve the load on the device.

## Claims

1. A loadbinder (100) including:
two attachment points for attaching the loadbinder to secure a load on a vehicle;
an adjustment mechanism is provided between the two attachment points for adjusting the effective length of the loadbinder (100); wherein the adjustment mechanism includes at least one threaded rotating component (114, 115) and rotation of the rotating component gives rise to a change in the effective length of the loadbinder;
a generally elongate handle (120);
the handle (120) is pivotally coupled to the adjustment mechanism;
the handle (120) is arranged to drive the at least one rotating component by pivoting in a plane which is substantially parallel to the axis of rotation of the rotating component;
wherein the adjustment mechanism includes an arrangement of bevel gears (131, 132, 135) that are provided in a housing (130);
**characterised in that**:
the housing (130) is provided in two parts which are able to rotate with respect to one another to allow the loadbinder to adopt a partially folded configuration.

2. A loadbinder according to claim 1 wherein at least one of the bevel gears (131, 132) is mounted at one end of the at least one rotating component (114, 115).

3. A loadbinder according to either of claims 1 or 2 wherein the handle (120) is mounted on a shaft (136) which drives a bevel gear.

4. A loadbinder according to any preceding claim wherein the handle is coupled to the adjustment mechanism by way of a ratchet and pawl arrangement (119) and a second rachet and pawl arrangement (319a, 322b) provided to enable the handle to operate a driving stroke when rotated in either direction.

5. A loadbinder according to any preceding claim wherein the handle is arranged to lie parallel with one of the threaded rotating components.

## Patentansprüche

1. Lastenspanner (100) mit:
zwei Befestigungspunkten zum Anbringen des Lastenspanners zum Sichern einer Ladung an einem Fahrzeug;
wobei zwischen den beiden Befestigungspunkten ein Einstellmechanismus zum Einstellen der effektiven Länge des Lastenspanners (100) vorgesehen ist, wobei der Einstellmechanismus mindestens eine rotierende Komponente mit Gewinde (114, 115) enthält und die Drehung der rotierenden Komponente zu einer Änderung der effektiven Länge des Lastenspanners führt;
einen generell länglichen Griff (120);
wobei der Griff (120) schwenkbar mit dem Einstellmechanismus gekoppelt ist;
wobei der Griff (120) angeordnet ist, um die mindestens eine rotierende Komponente durch Schwenken in einer Ebene anzutreiben, die im Wesentlichen parallel zur Drehachse der rotierenden Komponente ist;
wobei der Einstellmechanismus eine Anordnung von Kegelrädern (131, 132, 135) umfasst, die in einem Gehäuse (130) vorgesehen sind;
**dadurch gekennzeichnet, dass**:
das Gehäuse (130) in zwei Teilen bereitgestellt ist, die sich gegeneinander drehen können, damit der Lastbinder eine teilweise gefaltete Konfiguration annehmen kann.

2. Lastenspanner nach Anspruch 1, wobei mindestens eines der Kegelräder (131, 132) an einem Ende der mindestens einen rotierenden Komponente (114, 115) angebracht ist.

3. Lastenspanner nach einem der Ansprüche 1 oder 2, wobei der Griff (120) auf einer Welle (136) montiert ist, die ein Kegelrad antreibt.

4. Lastenspanner nach einem der vorhergehenden Ansprüche, wobei der Griff über eine Ratschen- und Sperrklinkenanordnung (119) und eine zweite Ratschen- und Sperrklinkenanordnung (319a, 322b), die vorgesehen sind, damit der Griff einen Antriebshub ausführen kann, wenn er in beide Richtungen gedreht wird, mit dem Einstellmechanismus verbunden ist.

5. Lastenspanner nach einem der vorhergehenden Ansprüche, wobei der Griff angeordnet ist, um parallel zu einer der rotierenden Komponenten mit Gewinde zu liegen.

## Revendications

1. Tendeur à levier (100) comportant :
deux points de fixation pour attacher le tendeur à levier afin de fixer une charge sur un véhicule ;
un mécanisme de réglage est prévu entre les deux points de fixation pour régler la longueur effective du tendeur à levier (100) ; dans lequel
le mécanisme de réglage comporte au moins un élément rotatif fileté (114, 115) et la rotation de l'élément rotatif donne lieu à une modification de la longueur effective du tendeur à levier ;
une poignée généralement allongée (120) ;
la poignée (120) est couplée de manière pivotante au mécanisme de réglage ;
la poignée (120) est agencée pour entraîner l'au moins un élément rotatif en pivotant dans un plan qui est sensiblement parallèle à l'axe de rotation de l'élément rotatif ;
dans lequel
le mécanisme de réglage comporte un agencement d'engrenages coniques (131, 132, 135) qui sont prévus dans un boîtier (130) ; **caractérisé en ce que** :
le boîtier (130) est prévu en deux parties qui peuvent tourner l'une par rapport à l'autre pour permettre au tendeur à levier d'adopter une configuration partiellement pliée.

2. Tendeur à levier selon la revendication 1, dans lequel au moins l'un des engrenages coniques (131, 132) est monté au niveau d'une extrémité de l'au moins un élément rotatif (114, 115).

3. Tendeur à levier selon l'une ou l'autre des revendications 1 ou 2, dans lequel la poignée (120) est montée sur un arbre (136) qui entraîne un engrenage conique.

4. Tendeur à levier selon une quelconque revendication précédente, dans lequel la poignée est couplée au mécanisme de réglage au moyen d'un système d'encliquetage (119) et d'un second système d'encliquetage (319a, 322b) prévus pour permettre à la poignée d'actionner une course d'entraînement lorsqu'elle est tournée dans n'importe quelle direction.

5. Tendeur à levier selon une quelconque revendication précédente, dans lequel la poignée est agencée pour être parallèle à l'un des éléments rotatifs filetés.
